# EUROPEAN PATENT SPECIFICATION

(11) **EP 3 613 585 B1**
(45) Date of publication and mention of the grant of the patent: **15.06.2022**
(21) Application number: 18788200.6
(22) Date of filing: 10.04.2018
(51) Int. Cl.: B29C 43/20, B29C 51/14, B29C 70/10, B32B 27/38, B29K 101/10, B29K 105/08, B29K 105/12, B29L 9/00, B32B 27/08, B32B 27/20, B32B 27/30, C08J 5/04, B29C 70/12, B29B 15/12, B29C 70/46, B29C 70/50, B32B 3/26, B32B 5/02, B32B 5/26

(54) **FIBER-REINFORCED COMPOSITE MATERIAL MOLDED ARTICLE AND METHOD FOR PRODUCING SAME**
FORMARTIKEL AUS FASERVERSTÄRKTEM VERBUNDSTOFF UND VERFAHREN ZUR HERSTELLUNG DAVON
ARTICLE MOULÉ EN MATÉRIAU COMPOSITE RENFORCÉ PAR DES FIBRES ET SON PROCÉDÉ DE FABRICATION

(30) Priority: 18.04.2017 JP 2017081755
(43) Date of publication of application: 26.02.2020
(73) Proprietor: Mitsubishi Chemical Corporation, Tokyo 100-8251 (JP)
(72) Inventor: NABESHIMA Yasuhiko, Tokyo 100-8251 (JP); MURANO Yasunori, Tokyo 100-8251 (JP); OOTA Akira, Tokyo 100-8251 (JP)
(74) Representative: Hoffmann Eitle
(86) International application number: PCT/JP2018/015030
(87) International publication number: WO 2018/193908

(56) References cited:
- WO-A1-02/081189
- JP-A- H0 726 040
- JP-A- S5 224 287
- JP-A- H01 158 050
- JP-A- H07 113 016
- US-A1- 2013 065 469

## Description

### TECHNICAL FIELD

The present invention relates to a fiber-reinforced composite material molded article having a thick portion and a method for producing the same.

### BACKGROUND ART

A sheet molding compound (hereinafter, described as SMC as well) is obtained by impregnating a sheet-like reinforcing fiber group, which is obtained by piling up short cut reinforcing fiber, with a resin composition containing a thermosetting resin. A molded article formed of SMC looks beautiful and has excellent mechanical characteristics, water resistance, corrosion resistance, and the like. Therefore, the molded article is widely used in the field of household appliances, automobiles, electric instruments, and the like. The length of the reinforcing fiber in SMC is short. Therefore, although the mechanical characteristics of the molded article formed of SMC are poorer than those of prepreg containing continuous fiber, SMC is suited for producing a molded article of a shape having differential thickness that is difficult to mold with prepreg or a molded article of a complicated shape having fine irregularities.

Generally, the molded article formed of SMC is produced by compression-molding SMC. Accordingly, the molded article formed of SMC is required to be excellently released from a die.

Furthermore, in a case where SMC is cured by compression molding, due to the cure shrinkage at the time of curing, the heating resulting from a curing reaction, thermal contraction resulting from cooling after the curing reaction, and the like, distortion frequently occurs in the interior of the molded article. In the case of a molded article having a thick portion, the interior distortion becomes serious in the thick portion, and a molding failure such as an internal crack, a sink mark, deformation, or the like easily occurs.

As a method for inhibiting a sink mark that occurs on the surface of a molded article due to the volumetric contraction in a case where a thermosetting resin is cast-molded, the following method is suggested although this is not a technique relating to the compression molding of SMC.
(1) Method of disposing a core material of a thermoplastic resin in a die, injecting a thermosetting resin into the periphery of the core material, and performing curing (PTL 1).

As molded articles formed of SMC in which the occurrence of an internal crack, a sink mark, and deformation in a thick portion is inhibited, the following molded articles are suggested.

(2) Molded article including a thick portion constituted with an inner layer which is formed of a cured material of a bulk molding compound (hereinafter, described as BMC as well) containing glass fiber and a surface layer which is formed of a cured material of glass fiber-containing SMC (hereinafter, described as GF-SMC as well) surrounding the inner layer (PTL 2).

(3) Molded article including a thick portion constituted with an inner layer which is formed of a cured material of GF-SMC with a high glass fiber content rate and a surface layer which is formed of a cured material of GF-SMC with a low glass fiber content rate that surrounds the inner layer (PTL 3).

PTL 4 relates to a bonding material comprising a bonding resin material, said bonding resin material comprising an epoxy resin material. The bonding material further comprises reinforcement layers.

### Citation List

### Patent Literature

[PTL 1] Japanese Patent No. 3463608
[PTL 2] Japanese Patent No. 5247733
[PTL 3] Japanese Patent No. 5293945
[PTL 4] WO 02/081189 A1

### DISCLOSURE OF INVENTION

### Technical Problem

As reinforcing fiber, carbon fiber is drawing attention because this fiber has a high specific strength and a high specific elastic modulus and makes it possible to greatly lighten a molded article. For the reinforcing fiber contained in SMC, glass fiber is increasingly replaced with carbon fiber. Hereinafter, SMC containing carbon fiber as reinforcing fiber will be described as CF-SMC as well.

The thermal conductivity of CF-SMC is better than that of GF-SMC. Therefore, in a case where a molded article having a thick portion is produced by compression-molding CF-SMC, the thick portion tends to be affected by thermal expansion resulting from heating, thermal contraction resulting from cooling, and the like. Furthermore, CF-SMC is stiffer than GF-SMC and hardly deformed.

Therefore, in a case where the technique (1) relating to the cast molding is applied to compression molding of CF-SMC, CF-SMC tends to be affected by the difference in thermal expansion and thermal contraction between different materials (between the thermoplastic resin of the inner layer and CF-SMC of the surface layer), and is hardly deformed due to high stiffness. Consequently, an internal crack more easily occurs on the interface between the inner layer and the surface layer.

Furthermore, in a case where the techniques (2) and (3) using glass fiber as reinforcing fiber are applied to compression molding of CF-SMC, CF-SMC tends to be affected by the difference in thermal expansion and thermal contraction between materials having different characteristics (between CF-BMC of the inner layer and CF-SMC of the surface layer or between the inner layer and the surface layer having different carbon fiber content rates), and is hardly deformed due to high stiffness. Consequently, an internal crack more easily occurs on the interface between the inner layer and the surface layer.

The present invention provides a fiber-reinforced composite material molded article, which is inhibited from experiencing the occurrence of an internal crack and has excellent release properties, and a method for producing the same.

### Solution to Problem

The present invention has the a number of aspects as defined in the claims.

### Advantageous Effects of Invention

The fiber-reinforced composite material molded article of the present invention is inhibited from experiencing the occurrence of an internal crack and has excellent release properties.

According to the method for producing the fiber-reinforced composite material molded article of the present invention, it is possible to produce a fiber-reinforced composite material molded article which is inhibited from experiencing the occurrence of an internal crack and has excellent release properties.

### BRIEF DESCRIPTION OF DRAWINGS

FIG. 1 is a cross-sectional view showing an example of a thick portion of a fiber-reinforced composite material molded article of the present invention.
FIG. 2 is a schematic constitution view showing an example of an SMC producing apparatus.

### BEST MODE FOR CARRYING OUT THE INVENTION

The following definitions of terms are applied to the present specification and claims.
"Sheet molding compound (SMC)" means a sheet-like uncured composite material containing reinforcing fiber which is short fiber and a thermosetting resin.
"Bulk molding compound (BMC)" means an uncured bulk composite material containing reinforcing fiber which is short fiber and a thermosetting resin.
"Prepreg" means a sheet-like uncured composite material containing reinforcing fiber which is continuous fiber and a thermosetting resin.
"Fiber-reinforced composite material (described as "composite material" as well) means an uncured composite material such as SMC, BMC, prepreg described above, or a preform which is formed in a die by a resin transfer molding (RTM) method by impregnating reinforcing fiber as continuous fiber with a thermosetting resin.
"Epoxy resin" is a generic term for thermosetting compounds having two or more reactive epoxy groups in a molecule.
"Vinyl ester resin" is a resin obtained by addition-reacting a vinyl group-containing monobasic acid (carboxylic acid or the like) with an epoxy resin.
"Maximum heating temperature (Tmax) of a composite material" is a maximum heating temperature of a sheet-like uncured composite material having a thickness of 4 mm that is determined by measuring curing characteristics of the composite material under the condition of a hot plate temperature of 140°C by a hot plate method by using a curing characteristic measurement apparatus specified in JASO M 406-87.

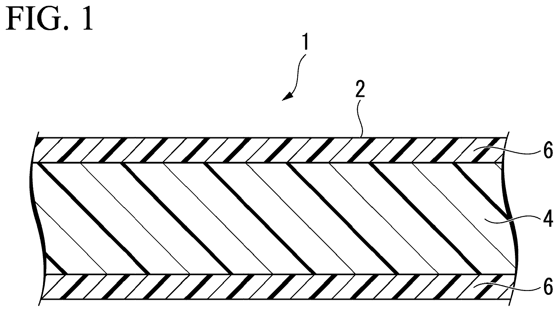

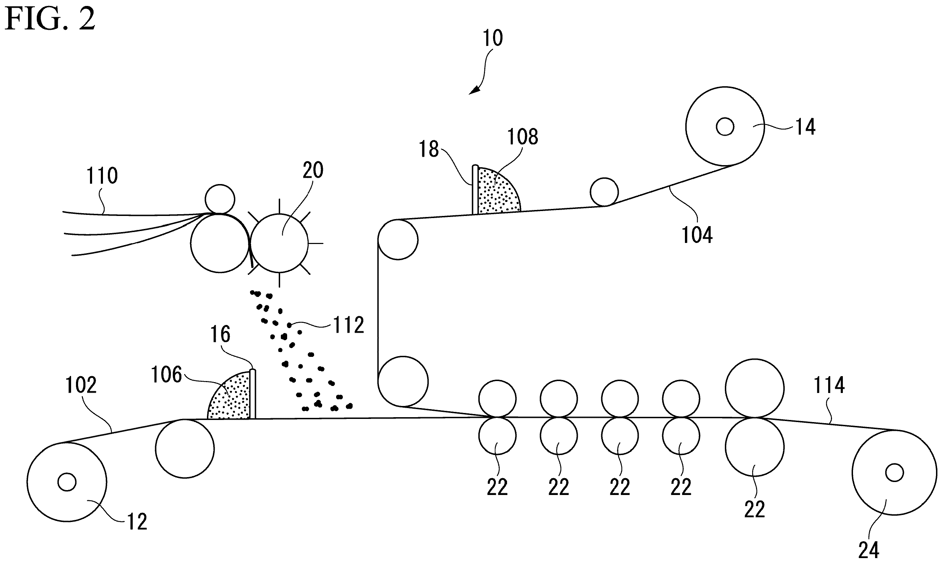

For the convenience of description, the dimensional ratio in FIG. 1 and FIG. 2 is different from the actual dimensional ratio.

### <Fiber-reinforced composite material molded article>

The fiber-reinforced composite material molded article of the present invention has a thick portion having a thickness equal to or greater than 10 mm. More specifically, the thickness of the thick portion is 10 to 50 mm, and preferably 20 to 40 mm.

The shape of the fiber-reinforced composite material molded article is not particularly limited. However, it is preferable that the molded article looks like a flat plate having a size of 100 to 250,000 mm² in a case where the molded article is seen in a plan view.

In a case where the molded article is seen in a plan view, the size of the thick portion is preferably 100 to 250,000 mm², and more preferably 28,000 to 90,000 mm².

The fiber-reinforced composite material molded article of the present invention may be totally composed of a thick portion having a thickness equal to or greater than 10 mm, or may have a thick portion having a thickness equal to or greater than 10 mm and a thin portion having a thickness less than 10 mm. In the present specification, "thickness" is measured using a dial caliper gauge.

### (Reinforcing fiber)

The fiber-reinforced composite material molded article of the present invention is constituted with reinforcing fiber, a resin cured material, or the like.

Examples of the reinforcing fiber which can be used in the present invention include carbon fiber, glass fiber, aramid fiber, alumina fiber, silicon carbide fiber, boron fiber, metal fiber, natural fiber, mineral fiber, and the like. One kind of each of these reinforcing fibers may be used singly, or a plurality of kinds of these reinforcing fibers may be used in combination.

From the viewpoint of specific strength, high stiffness, and a high lightening effect, carbon fiber is preferable as the reinforcing fiber. Examples of the carbon fiber include polyacrylonitrile (PAN)-based carbon fiber, rayon-based carbon fiber, pitch-based carbon fiber, and the like.

### (Thick portion)

One of the characteristics of the fiber-reinforced composite material molded article of the present invention is that the thick portion thereof has an inner layer which is formed of a cured material of a specific composite material (A) and a surface layer which is formed of a cured material of a specific composite material (B).

The surface layer may be laminated on either or both of the surfaces of the inner layer.

FIG. 1 is a cross-sectional view showing an example of the thick portion of the fiber-reinforced composite material molded article of the present invention.

In a fiber-reinforced composite material molded article 1, a thick portion 2 has an inner layer 4 and surface layers 6 contacting a first surface and a second surface of the inner layer 4.

### (Thin portion)

In a case where the fiber-reinforced composite material molded article of the present invention has a thin portion, the layer constitution of the thin portion may be the same as or different from the layer constitution of the thick portion. For example, the thin portion may have an inner layer formed of a cured material of the composite material (A) and a surface layer formed of a cured material of the composite material (B); may be formed only of a cured material of the composite material (A); may be formed only of a cured material of the composite material (B); or may be formed of a cured material of another fiber-reinforced composite material.

### (Inner layer and surface layer)

The inner layer is formed of a cured material of the composite material (A). The inner layer may be formed by curing a material obtained by laminating a plurality of composite materials (A).

The surface layer is formed of a cured material of the composite material (B). The surface layer may be formed by curing a material obtained by laminating a plurality of composite materials (B).

The surface layer just needs to cover at least the first surface and the second surface of the inner layer. In view of further improving the release properties of the molded article, it is preferable that the surface layer totally covers the periphery of the inner layer.

In the thick portion, a thickness ratio between the inner layer and the surface layer (thickness of surface layer/thickness of inner layer) is within a range of 0.01 to 2. The thickness ratio is preferably 0.01 to 1, more preferably 0.05 to 0.8, and particularly preferably 0.1 to 0.5. In a case where surface layer/inner layer is equal to or higher than 0.01, more preferably equal to or higher than 0.05, and even more preferably equal to or higher than 0.1, the release properties or molding properties of the fiber-reinforced composite material molded article obtained by compression molding tend to become excellent. Furthermore, in a case where surface layer/inner layer is equal to or lower than 2, more preferably equal to or lower than 1, even more preferably equal to or lower than 0.8, and particularly preferably equal to or lower than 0.5, the occurrence of an internal crack in the fiber-reinforced composite material molded article obtained by compression molding tends to be inhibited. In a case where the surface layer is laminated on both surfaces of the inner layer, a ratio represented by [total thickness of surface layer/thickness of inner layer] is within the above range.

### (Composite material (A))

The composite material (A) is an uncured composite material containing the aforementioned reinforcing fiber and an epoxy resin. From the viewpoint of specific strength, high stiffness, and a high lightening effect, carbon fiber is preferable as the reinforcing fiber.

It is preferable that the composite material (A) further contains a curing agent, because then a tough cured material that is not dissolved or melted can be formed. As long as the effects of the present invention are not impaired, if necessary, the composite material (A) may further contain other components in addition to the carbon fiber, the epoxy resin, and the curing agent.

For example, the composite material (A) is in the form of SMC, BMC, prepreg, a composite material formed in a die by a resin transfer molding (RTM) method. It is preferable that the composite material (A) is in the form of SMC, because then the handleability thereof becomes excellent, the mechanical characteristics of the molded article become excellent, and the molding properties and adhesiveness of the composite material (A) become excellent.

SMC as the composite material (A) can be prepared by causing a composition, which contains reinforcing fiber and an epoxy resin, to stand still at a temperature of 20°C to 40°C for 48 to 168 hours so as to thicken the composition.

Examples of the carbon fiber include polyacrylonitrile (PAN)-based carbon fiber, rayon-based carbon fiber, pitch-based carbon fiber, and the like. As the carbon fiber, PAN-based carbon fiber is preferable because this fiber improves the compression strength of the molded article.

For example, the carbon fiber is in the form of a carbon fiber tow constituted with continuous fiber aligned in one direction; a short fiber tow obtained by cutting a tow in a specific length; cloth obtained by weaving continuous fiber as warp and weft; a sheet obtained by aligning tows in one direction and holding them with weft supporting threads; multi-axial warp knit obtained by stacking a plurality of unidirectional sheets, which are prepared by aligning tows in one direction, in different directions and fixing them by means of stitching using supporting threads; non-woven cloth; and the like. It is preferable that the carbon fiber is in the form of a short fiber tow, because then the molding properties of the composite material (A) and the mechanical characteristics of the molded article are balanced well. Furthermore, the short fiber tow may be used in combination with carbon fiber in another form. For example, in a case where SMC containing the short fiber tow is used in combination with prepreg containing continuous fiber, it is possible to obtain the composite material (A) having advantages of both the SMC and prepreg. In a case where such a composite material (A) is used, for example, the mechanical characteristics of a big molded article having fine irregularities can be improved.

In a case where carbon fiber is used as reinforcing fiber, the length thereof is preferably equal to or greater than 5 mm, more preferably equal to or greater than 10 mm, and even more preferably equal to or greater than 20 mm. In a case where the length of the carbon fiber is equal to or greater than the lower limit of the above range, the mechanical characteristics of the molded article become excellent. In a case where the composite material (A) is SMC, the length of the carbon fiber is equal to or greater than 5 mm and equal to or smaller than 50 mm, preferably equal to or greater than 10 mm and equal to or smaller than 40 mm, and even more preferably equal to or greater than 20 mm and equal to or smaller than 30 mm. In a case where the length of the carbon fiber is equal to or smaller than the upper limit of the above range, the molding properties of SMC become excellent. In the present specification, "length" can be measured with a ruler, a caliper, and the like.

The epoxy resin just needs to be an epoxy resin used in a fiber-reinforced composite material. Examples of the epoxy resin include a bisphenol A epoxy resin, a cyclic aliphatic epoxy resin, a novolac epoxy resin, a heat-resistant epoxy resin, and the like.

Examples of curing agents for the epoxy resin include aliphatic polyamine, polyamide, aromatic diamine, an acid anhydride, tertiary amine, and the like.

Examples of other components that the composite material (A) may contain include a reactive diluent, reinforcing fiber other than carbon fiber, a resin other than an epoxy resin, a filler other than reinforcing fiber, other additives (an internal release agent, a defoaming agent, a flame retardant, a weather fastness enhancer, an antioxidant, a heat stabilizer, an ultraviolet absorber, a plasticizer, a lubricant, a colorant, a compatibilizer, a thickener, a curing agent, an inhibitor, a rubber reinforcing agent, a surface coating agent, a low profile agent), and the like.

The maximum heating temperature (Tmax) of the composite material (A) is preferably equal to or lower than 200°C, more preferably equal to or lower than 180°C, and even more preferably equal to or lower than 160°C. The thicker the thick portion of the fiber-reinforced composite material molded article, the further the composite material (A) and the SMC (B) heat at the time of curing. Accordingly, the temperature of the center of the inner layer formed of the composite material (A) is increased. As a result, due to the thermal expansion resulting from the curing reaction and the thermal contraction resulting from cooling after the curing reaction, serious internal distortion occurs, and an internal crack easily occurs. Therefore, the lower the maximum heating temperature (Tmax) of the composite material (A) at the time of curing, the more effective it is to inhibit the occurrence of an internal crack. The maximum heating temperature (Tmax) of the composite material (A) is preferably 140°C to 200°C, and more preferably 145°C to 180°C.

### (Composite material (B))

The composite material (B) is an uncured composition material containing reinforcing fiber and a vinyl ester resin. From the viewpoint of specific strength, high stiffness, and a high lightening effect, carbon fiber is preferable as the reinforcing fiber. It is preferable that the composite material (B) further contains a curing agent, because then a tough cured material that is not dissolved or melted can be formed. In view of excellent mechanical characteristics of the molded article and excellent molding properties of the composite material (B), the composite material (B) preferably further contains a polyisocyanate compound and a reactive diluent, and more preferably further contains an unsaturated polyester resin, a polyisocyanate compound, and a reactive diluent. As long as the effects of the present invention are not impaired, if necessary, the composite material (B) may contain carbon fiber, a vinyl ester resin, a curing agent, an unsaturated polyester resin, a polyisocyanate compound, a reactive diluent such as styrene, and components other than these.

For example, the composite material (B) is in the form of SMC, BMC, prepreg, a composite material formed in a die by a resin transfer molding (RTM) method, and the like. It is preferable that the composite material (B) is in the form of SMC, because then the handleability thereof becomes excellent, the mechanical characteristics of the molded article become excellent, and the molding properties and adhesiveness of the composite material (B) become excellent.

SMC as the composite material (B) can be prepared by causing a composition, which contains reinforcing fiber and a vinyl ester resin, to stand still at a temperature of 20°C to 40°C for 48 to 168 hours so as to thicken the composition.

Examples of carbon fiber which can be used in the composite material (B) are the same as the examples of the carbon fiber in the composite material (A), and the preferable types and forms thereof are also the same.

In a case where carbon fiber is used as reinforcing fiber of the composite material (B), the length thereof is preferably equal to or greater than 5 mm, more preferably equal to or greater than 10 mm, and even more preferably equal to or greater than 20 mm. In a case where the length of the carbon fiber is equal to or greater than the lower limit of the above range, the mechanical characteristics of the molded article become excellent. In a case where the composite material (B) is SMC, the length of the carbon fiber is equal to or greater than 5 mm and equal to or smaller than 50 mm, preferably equal to or greater than 10 mm and equal to or smaller than 40 mm, and even more preferably equal to or greater than 20 mm and equal to or smaller than 30 mm. In a case where the length of the carbon fiber is within the above range, the mechanical characteristics of the molded article and the molding properties of SMC become excellent.

The vinyl ester resin just needs to be a vinyl ester resin used in a fiber-reinforced composite material. Examples of the vinyl ester resin include an epoxy (meth)acrylate resin obtained by addition-reacting a (meth)acrylic acid with an epoxy resin, and the like.

Examples of curing agents for the vinyl ester resin include an organic peroxide and the like. Examples of the organic peroxide include peroxyketal, peroxycarbonate, ketone peroxide, diacyl peroxide, dialkyl peroxide, alkyl perester, and the like.

The unsaturated polyester resin just needs to be an unsaturated polyester resin used in a fiber-reinforced composite material. Examples of the unsaturated polyester resin include a resin obtained by causing a condensation reaction between a dicarboxylic acid including an unsaturated dicarboxylic acid and a divalent glycol.

The polyisocyanate compound is used as a thickener. Examples of the polyisocyanate compound include diphenylmethane diisocyanate, hexamethylene diisocyanate, tolyene diisocyanate, xylene diisocyanate, 4,4'-methylenebis(cyclohexylisocyanate), isophorone diisocyanate, trimethylhexamethylene diisocyanate, and the like.

Examples of the reactive diluent include a vinyl monomer, a monofunctional (meth)acrylate, a polyfunctional (meth)acrylate, and the like.

Examples of the vinyl monomer include styrene, α-methylstyrene, α-ethylstyrene, vinyl toluene, and the like.

Examples of the monofunctional (meth)acrylate include methyl (meth)acrylate, ethyl (meth)acrylate, isopropyl (meth)acrylate, n-butyl (meth)acrylate, t-butyl (meth)acrylate, isobutyl (meth)acrylate, 2-ethylhexyl (meth)acrylate, lauryl (meth)acrylate, alkyl (meth)acrylate (having 12 or 13 carbon atoms), tridecyl (meth)acrylate, stearyl (meth)acrylate, cyclohexyl (meth)acrylate, benzyl (meth)acrylate, isobornyl (meth)acrylate, glycidyl (meth)acrylate, tetrahydrofurfuryl (meth)acrylate, allyl (meth)acrylate, 2-hydroxyethyl (meth)acrylate, hydroxypropyl (meth)acrylate, 2-methoxyethyl (meth)acrylate, 2-ethoxyethyl (meth)acrylate, dimethylaminoethyl (meth)acrylate, a dimethylaminoethyl (meth)acrylate methyl chloride salt, a dimethylaminoethyl (meth)acrylate benzyl chloride salt, diethylaminoethyl (meth)acrylate, trifluoroethyl (meth)acrylate, heptadecafluorodecyl (meth)acrylate, dicyclopentenyl (meth)acrylate, dicyclopentenyloxyethyl (meth)acrylate, dicyclopentanyl (meth)acrylate, methoxypolyethylene glycol (meth)acrylate, and the like.

Examples of the polyfunctional (meth)acrylate include ethylene glycol di(meth)acrylate, diethylene glycol di(meth)acrylate, triethylene glycol di(meth)acrylate, polyethylene glycol di(meth)acrylate (n = 4 to 23), propylene glycol di(meth)acrylate, dipropylene glycol di(meth)acrylate, tripropylene glycol di(meth)acrylate, polypropylene glycol di(meth)acrylate (n = 4 to 10), 2-butyl-2-ethyl-1,3-propanediol di(meth)acrylate, 2-hydroxy-1,3-propanediol di(meth)acrylate, butanediol di(meth)acrylate, 1,3-butylene glycol di(meth)acrylate, polybutylene glycol di(meth)acrylate (n = 8 or 9), neopentyl glycol di(meth)acrylate, pentanediol di(meth)acrylate, 1,6-hexanediol di(meth)acrylate, trimethylolethane tri(meth)acrylate, trimethylolpropane tri(meth)acrylate, tetramethylolmethane tri(meth)acrylate, tetramethylolmethane tetra(meth)acrylate, pentaerythritol di(meth)acrylate, dipentaerythritol di(meth)acrylate, sorbitol di(meth)acrylate, trishydroxyethyl isocyanurate, nonanediol di(meth)acrylate, tris(2-(meth)acryloyloxyethyl)isocyanate, 2,2-bis[4-((meth)acryloxyethoxy)phenyl]propane, 2,2-bis[4-((meth)acryloxydiethoxy)phenyl]propane, 2,2-bis[4-((meth)acryloxypolyethoxy)phenyl]propane (n = 3 to 30), 2-hydroxy-1-acryloxy-3-methacryloxypropane, and the like.

Examples of other components that the composite material (B) may contain include reinforcing fiber other than carbon fiber, a resin other than a vinyl ester resin and an unsaturated polyester resin, a filler other than reinforcing fiber, various other additives (an internal release agent, a defoaming agent, a flame retardant, a weather fastness enhancer, an antioxidant, a heat stabilizer, an ultraviolet absorber, a plasticizer, a lubricant, a colorant, a compatibilizer, a thickener other than a polyisocyanate compound, a curing agent, an inhibitor, a rubber reinforcing agent, a surface coating agent, a low profile agent), and the like.

### (Content rate of reinforcing fiber)

In view of the mechanical characteristics of the molded article, the molding properties of the composite material (A) or the composite material (B), and the lightening of the molded article, the content rate of the reinforcing fiber in the fiber-reinforced composite material molded article of the present invention with respect to the total mass of the fiber-reinforced composite material molded article is preferably equal to or higher than 30% by mass and equal to or lower than 70% by mass, and more preferably equal to or higher than 40% by mass and equal to or lower than 60% by mass. In a case where the content rate of the reinforcing fiber is equal to or higher than the lower limit of the above range, the strength or the stiffness of the molded article is sufficiently improved. Therefore, the thickness of the molded article does not need to be increased, and the molded article can be lightened. Furthermore, the content rate of a resin is reduced, and hence the occurrence of an internal crack is further inhibited. In a case where the content rate of the reinforcing fiber is equal to or lower than the upper limit of the above range, the molding properties of the composite material (A) or the composite material (B) are further improved, and a molded article having a more complicated shape can be produced.

### (Mechanism of action)

For the reasons described below, the fiber-reinforced composite material molded article of the present invention described so far is inhibited from experiencing the occurrence of an internal crack and has excellent release properties.

Compared to a vinyl ester resin, an epoxy resin experiences less cure shrinkage, heats less at the time of curing, has higher adhesive force, and forms a cured material having higher strength. Therefore, the epoxy resin is extremely useful as a matrix resin of a fiber-reinforced composite material molded article. However, in a case where a molded article is produced using only SMC containing an epoxy resin, although the occurrence of an internal crack in a thick portion is inhibited, the release properties thereof with respect to a die become insufficient.

In contrast, compared to an epoxy resin, a vinyl ester resin forms a cured material having better release properties. However, in a case where a molded article having a thick portion with a thickness equal to or greater than 10 mm is produced using only SMC containing a vinyl ester resin, due to the cure shrinkage at the time of curing, the heating resulting from a curing reaction, the thermal contraction resulting from cooling after the curing reaction, and the like, the internal distortion frequently occurs in the molded article. The internal distortion of the thick portion tends to become serious as the thickness of the thick portion increases, and molding failures such as an internal crack tend to increase.

Therefore, in a case where a molded article is produced which includes a thick portion having a thickness equal to or greater than 10 mm that has an inner layer formed of the composite material (A) containing an epoxy resin and a surface layer formed of SMC (B) containing a vinyl ester resin, the internal heating is suppressed, and the interfacial adhesiveness becomes excellent as well. Consequently, it is possible to obtain a molded article having less molding failures such as an internal crack and excellent release properties.

The fiber-reinforced composite material molded article having less molding failures such as an internal crack is suitable as a member required to have high strength and high stiffness, such as a substitute obtained by lightening a complicated cast metal part or forged metal product. Specifically, the fiber-reinforced composite material molded article is preferably used as a lightened interior or exterior member or an underframe member for automobiles.

### <Method for producing SMC>

SMC which can be used in the present invention can be produced by known methods. For example, by preparing a resin composition containing a thermosetting resin (a vinyl ester resin, an epoxy resin, or the like), a curing agent, and the like, impregnating a sheet-like carbon fiber group obtained by piling up short cut carbon fiber with the resin composition, and keeping the resulting substance as it is for a certain period of time so as to thicken the substance, SMC can be produced.

FIG. 2 is a schematic constitution view showing an example of an SMC producing apparatus.

An SMC producing apparatus 10 includes a supply roll 12 that supplies a first carrier film 102; a second supply roll 14 that supplies a second carrier film 104; a first doctor blade 16 that coats the surface of the first carrier film 102 with a resin composition 106; a second doctor blade 18 that coats the surface of the second carrier film 104 with a resin composition 108; a chopper 20 that cuts a carbon fiber tow 110 and scatters a cut short fiber tow 112 onto the resin composition 106 on the surface of the first carrier film 102; a plurality of impregnation roll pairs 22 that a laminated sheet 114 passes which is obtained by superposing the first carrier film 102 coated with the resin composition 106 and including the short fiber tow 112 deposited thereon and the second carrier film 104 coated with the resin composition 108 such that the short fiber tow 112 and the resin composition 108 contact each other; and a winding roll 24 that winds up the laminated sheet 114 having passed through the impregnation roll pairs 22.

By using the SMC producing apparatus 10, SMC is produced as below.

The surface of the first carrier film 102 supplied from the first supply roll 12 is uniformly coated with the resin composition 106 at a predetermined thickness by using the first doctor blade 16.

A plurality of carbon fiber tows 110 supplied from a plurality of bobbins (not shown in the drawing) are cut in a length equal to or greater than 5 mm and equal to or smaller than 50 mm by the chopper 20, and the short fiber tows 112 obtained by cutting the carbon fiber tows 110 are scattered and deposited in the form of a sheet on the resin composition 106 on the surface of the first carrier film 102.

The surface of the second carrier film 104 supplied from the second supply roll 14 is uniformly coated with the resin composition 108 at a predetermined thickness by using the second doctor blade 18.

The first carrier film 102, which is coated with the resin composition 106 and on which the short fiber tows 112 are deposited by being two-dimensionally and randomly aligned, and the second carrier film 104 coated with the resin composition 108 are superposed such that the short fiber tows 112 and the resin composition 108 contact each other, thereby preparing the laminated sheet 114.

The laminated sheet 114 is caused to sequentially pass through the plurality of impregnation roll pairs 22 such that the sheet-like short fiber tows 112 are impregnated with the resin composition from top and bottom.

The laminated sheet 114 having passed through the impregnation roll pairs 22 is wound up around the winding roll 24, then left to age for several days at a temperature equal to or higher than 10°C and equal to or lower than 50°C such that the resin composition is thickened, thereby obtaining SMC.

It is preferable that the resin composition has viscosity at which the carbon fiber can be impregnated with the resin composition but the resin composition does not drip from the side of the carrier film. Furthermore, it is preferable that the viscosity of the resin composition after aging is increased to such a degree that the carrier film can be easily exfoliated.

### <Method for producing fiber-reinforced composite material molded article>

The method for producing the fiber-reinforced composite material molded article of the present invention is a method of producing a fiber-reinforced composite material molded article having a thick portion with a thickness equal to or greater than 10 mm by compression-molding an uncured fiber-reinforced composite material.

### (Thick portion)

One of the characteristics of the present invention is that as a carbon fiber-reinforced composite material corresponding to the thick portion, a laminate is used which has an inner layer formed of the uncured composite material (A) and a surface layer formed of the uncured composite material (B).

### (Thin portion)

In a case where the carbon fiber-reinforced composite material molded article of the present invention has a thin portion, the fiber-reinforced composite material corresponding to the thin portion may be the same as or different from that of the thick portion. For example, the fiber-reinforced composite material corresponding to the thin portion may be a laminate having an inner layer formed of the composite material (A) and a surface layer formed of the composite material (B); a laminate formed only of the composite material (A); a laminate formed only of the composite material (B); or another fiber-reinforced composite material.

### (Inner layer and surface layer)

In the laminate, the inner layer is formed of the composite material (A). The inner layer may be formed by laminating a plurality of composite materials (A).

In the laminate, the surface layer is formed of the composite material (B). The surface layer may be formed by laminating a plurality of composite materials (B).

The surface layer just needs to cover at least the first surface and the second surface of the inner layer. In view of further improving the release properties of the molded article, it is preferable that the surface layer totally covers the periphery of the inner layer.

### (Compression molding method)

The fiber-reinforced composite material molded article is manufactured by a compression molding method, for example, in the following manner.

An appropriate amount of fiber-reinforced composite material is put into a die (a lower die and an upper die) mounted on a press machine. By using the press machine, the die controlled (heated) to be a predetermined temperature is clamped. While being heated, the fiber-reinforced composite material is compressed by the upper die and the lower die. In this way, the fiber-reinforced composite material is molded in the shape of the die. In the clamped state, the fiber-reinforced composite material is cured by being kept as it is for a predetermined period of time. After being cooled, the fiber-reinforced composite material molded article is taken out of the die.

The molding temperature at which the fiber-reinforced composite material is cured is preferably 120°C to 150°C, and more preferably 130°C to 140°C.

The molding pressure at which the fiber-reinforced composite material is cured is preferably 2 to 10 MPa, and more preferably 4 to 8 MPa.

The molding time for which the fiber-reinforced composite material is cured is preferably 0.25 minutes to 2 minutes per thickness of 1 mm, and more preferably 0.3 minutes to 1 minutes per thickness of 1 mm.

For example, for a molded article having a thickness of 20 mm, the molding time is preferably 5 minutes to 40 minutes, and more preferably 6 minutes to 20 minutes.

### (Mechanism of action)

In the method for producing the fiber-reinforced composite material molded article of the present invention described so far, as the fiber-reinforced composite material corresponding to the thick portion, a laminate is used which has an inner layer formed of the uncured composite material (A) and a surface layer formed of the uncured composite material (B). Therefore, for the same reasons as those described above, it is possible to produce a fiber-reinforced composite material molded article which is inhibited from experiencing the occurrence of an internal crack and has excellent release properties.

### EXAMPLES

Hereinafter, the present invention will be specifically described based on examples, but the present invention is not limited thereto.

### <Evaluation method>

### (Maximum heating temperature (Tmax))

As a maximum heating temperature (Tmax) of SMC, a maximum heating temperature of sheet-like uncured SMC having a thickness of 4 mm was adopted which was determined by measuring curing characteristics of the SMC under the condition of a hot plate temperature of 140°C by a hot plate method by using a curing characteristic measurement apparatus (manufactured by Nichinan Seiki KK, 1.5-ton air heat press machine) specified in JASO M 406-87.

Specifically, on a hot plate of an air heat press machine, a U-shaped spacer (inside dimension: 100 mm × 100 × 4 mm) which makes it possible to measure the temperature of the center was set. At a hot plate temperature of 140°C and a molding pressure of 1.2 MPa, the center of the spacer was charged with a predetermined uncured SMC sample, the hot plate was quickly closed, and the curing characteristics (temperature change) of the uncured SMC sample was measured. The maximum heating temperature (Tmax) at this time was adopted as the maximum heating temperature (Tmax) of SMC.

### (Release properties)

By compression molding, three molded articles were produced without coating the die with an external release agent. At the time of taking the molded articles out of the die, the state where the molded articles and the mold stuck to each other was evaluated.

An example producing a molded article that did not stick to the mold was evaluated as "excellent", and an example producing a molded article that stuck to the mold was evaluated as "defective".

### (Internal crack)

For each of the three molded articles, the state where an internal crack occurred on a cut surface was visually checked. In a case where no internal crack occurred in all of the three molded articles, the example was described as "absent". In a case where an internal crack occurred in all of the three molded articles, the example was described as "present".

### <Production of SMC>

### (Production Example 1)

### Preparation of epoxy resin composition:

83 parts by mass of a liquid bisphenol A epoxy resin (manufactured by Mitsubishi Chemical Corporation, jER (registered trademark) 827), 4 parts by mass of dicyandiamide (manufactured by Air Products and Chemicals, Inc., DICYANEX 1400F) and 4 parts by mass of 2,4-diamino-6-[2'-methylimidazolyl-(1')]-ethyl-s-triazine (manufactured by SHIKOKU CHEMICALS CORPORATION, 2MZA-PW) as curing agent were mixed together in advance, and kneaded with a triple roll. The mixture was mixed with 5 parts by mass of 2-ethylhexylglycidylether (manufactured by Mitsubishi Chemical Corporation, YED 188) and 12 parts by mass of 1,6-hexanedioldiglycidylether (manufactured by Mitsubishi Chemical Corporation, YED 216M) as reactive diluents and 11.7 parts by mass of 3,3'-dimethyl-4,4'-diaminodicyclohexylmethane (manufactured by Mitsubishi Chemical Corporation, jER CURE (registered trademark) 113) as a curing agent, thereby obtaining a paste-like epoxy resin composition.

### Production of SMC (A-1):

By using a doctor blade, a carrier film made of polyethylene was coated with the epoxy resin composition such that the thickness thereof became 1.0 mm. On the epoxy resin composition, chopped carbon fiber tows, which were obtained by cutting a carbon fiber tow constituted with 15,000 filaments (manufactured by Mitsubishi Rayon Co., Ltd., TR50S 15L) in a length of 25 mm, were scattered such that the basis weight of the carbon fiber substantially became uniform at 1,200 g/m² and the fiber direction of the carbon fiber became random.

By using a doctor blade, another carrier film made of polyethylene was coated with the epoxy resin composition such that the thickness thereof became 1.0 mm.

The chopped carbon fiber tows were sandwiched between two sheets of the carrier films such that the side of the epoxy resin composition became inside. The resulting substance was compressed by being passed between impregnation roll pairs such that the chopped carbon fiber tows were thoroughly impregnated with the epoxy resin composition, thereby obtaining an SMC precursor. The SMC precursor was left to stand at room temperature (23°C) for 168 hours such that the epoxy resin composition in the SMC precursor was sufficiently thickened, thereby obtaining SMC (A-1) constituted with the chopped carbon fiber tows excellently impregnated with the epoxy resin composition. The amount of resin in SMC (A-1) was 1,200 g/m² (that is, the content rate of carbon fiber in SMC (A-1) was 50% by mass).

### (Production Example 2)

### Preparation of vinyl ester resin composition:

A vinyl ester resin (manufactured by U-PICA Company.Ltd., NEOPOL 8051, containing an epoxy (meth)acrylate resin, an unsaturated polyester resin, and styrene, 100 parts by mass), 0.5 parts by mass of a 75% solution of 1,1-di(t-butylperoxy)cyclohexane (manufactured by NOF CORPORATION, PERHEXA (registered trademark) C-75 (EB)) and 0.5 parts by mass of a 74% solution of t-butylperoxyisopropyl carbonate (manufactured by KAYAKU AKUZO CORPORATION, KAYACARBON BIC-75) as curing agents, 0.35 parts by mass of a phosphoric acid ester derivative composition (manufactured by AXEL Plastics Research Laboratories, Inc., MOLD WIZINIT-EQ-6) as an internal release agent, 15.5 parts by mass of modified diphenylmethane diisocyanate (manufactured by Mitsui Chemicals, Inc., COSMONATE (registered trademark) LL) as a thickener, 0.02 parts by mass of 1,4-benzoquinone as a stabilizer, and 5 parts by mass of milled carbon fiber (manufactured by Nippon Polymer Sangyo Co., Ltd., MP30X) were thoroughly mixed and stirred together, thereby obtaining a paste-like vinyl ester resin composition.

### Production of SMC (B-1):

By using a doctor blade, a carrier film made of polyethylene was coated with the vinyl ester resin composition such that the thickness thereof became 1.0 mm. On the vinyl ester resin composition, chopped carbon fiber tows, which were obtained by cutting a carbon fiber tow constituted with 15,000 filaments (manufactured by Mitsubishi Rayon Co., Ltd., TR50S 15L) in a length of 25 mm, were scattered such that the basis weight of the carbon fiber substantially became uniform and the fiber direction of the carbon fiber became random.

By using a doctor blade, another carrier film made of polyethylene was coated with the vinyl ester resin composition such that the thickness thereof became 1.0 mm.

The chopped carbon fiber tows were sandwiched between two sheets of the carrier films such that the side of the vinyl ester resin composition became inside. The resulting substance was compressed by being passed between impregnation roll pairs such that the chopped carbon fiber tows were thoroughly impregnated with the vinyl ester resin composition, thereby obtaining an SMC precursor. The SMC precursor was left to stand at room temperature (23°C) for 72 hours such that the vinyl ester resin composition in the SMC precursor was sufficiently thickened, thereby obtaining SMC (B-1) constituted with the chopped carbon fiber tows excellently impregnated with the vinyl ester resin composition. In the SMC (B-1), the content rate of carbon fiber excluding the milled carbon fiber was 50% by mass.

### <Production of molded article>

### (Example 1)

SMC (A-1) and SMC (B-1) were cut in a size of 180 mm × 135 mm, and laminated according to a lamination pattern in which SMC (B-1) 2ply-SMC (A-1) 10 ply-SMC (B-1) 2ply were laminated in this order from the bottom. A molding die was charged with the laminated SMC at a charge ratio (ratio of the area of the charging material to the area of the die) of 87%, and the resin composition was cured by being heated and pressed for 8 minutes under the condition of a die temperature of 140°C and a pressure of 8 MPa, thereby obtaining a flat plate-like carbon fiber composite material molded article having a size of 200 mm × 140 mm × 20 mm (thickness) (constitutional ratio: B-1/A-1/B-1 = 3 mm/14 mm/3 mm). A thickness ratio represented by [total thickness of surface layer]/[thickness of inner layer] was 0.43. The evaluation was performed for three molded articles. The results are shown in Table 1.

### (Example 2)

A flat plate-like carbon fiber composite material molded article having a size of 200 mm × 140 mm × 40 mm (thickness) (constitutional ratio: B-1/A-1/B-1 = 3 mm/34 mm/3 mm) was obtained in the same manner as in Example 1, except that the lamination pattern was changed such that SMC (B-1) 2ply-SMC (A-1) 25ply-SMC (B-1) 2ply were laminated in this order from the bottom, and the heating and pressing time was changed to 16 minutes. A thickness ratio represented by [total thickness of surface layer]/[thickness of inner layer] was 0.18. The evaluation was performed for three molded articles. The results are shown in Table 1.

### (Comparative Example 1)

A flat plate-like carbon fiber composite material molded article having a size of 200 mm × 140 mm × 20mm (thickness) was obtained in the same manner as in Example 1, except that the lamination pattern was changed such that only SMC (B-1) was laminated in 12 ply. The evaluation was performed for three molded articles. The results are shown in Table 1.

### (Comparative Example 2)

A flat plate-like carbon fiber composite material molded article having a size of 200 mm × 140 mm × 20mm (thickness) was obtained in the same manner as in Example 1, except that the lamination pattern was changed such that only SMC (A-1) was laminated in 15ply. The evaluation was performed for three molded articles. The results are shown in Table 1.

**[Table 1]**

| | | Matrix resin of SMC | Content rate of carbon fiber (% by mass) | Thickness (mm) | Tmax (°C) | Internal crack | Release properties |
|---|---|---|---|---|---|---|---|
| Example 1 | Inner layer | Epoxy resin | 50 | 14 | 150 | Absent | Excellent |
| | Surface layer | Vinyl ester resin | 50 | 3 (one side) | 215 | | |
| Example 2 | Inner layer | Epoxy resin | 50 | 34 | 150 | Absent | Excellent |
| | Surface layer | Vinyl ester resin | 50 | 3 (one side) | 215 | | |
| Comparative Example 1 | - | Vinyl ester resin | 50 | 20 | 215 | Present | Excellent |
| Comparative Example 2 | - | Epoxy resin | 50 | 20 | 150 | Absent | Defecti ve |

### Industrial Applicability

The fiber-reinforced composite material molded article of the present invention is useful as various members in household appliances, automobiles, electric instruments, and the like.

### Reference Signs List

- 1: fiber-reinforced composite material molded article
- 2: thick portion
- 4: inner layer
- 6: surface layer
- 10: SMC production apparatus
- 12: first supply roll
- 14: second supply roll
- 16: first doctor blade
- 18: second doctor blade
- 20: chopper
- 22: impregnation roll pair
- 24: winding roll
- 102: first carrier film
- 104: second carrier film
- 106: resin composition
- 108: resin composition
- 110: carbon fiber tow
- 112: short fiber tow
- 114: laminated sheet

## Claims

1. A fiber-reinforced composite material molded article comprising:
a thick portion having a thickness of 10 to 50 mm,
wherein the thick portion has an inner layer which is formed of a cured material of a composite material (A) containing reinforcing fiber (a1) and an epoxy resin and a surface layer which is formed of a cured material of a composite material (B) containing reinforcing fiber (b1) and a vinyl ester resin, and
the thickness ratio between the inner layer and the surface layer represented by [thickness of surface layer]/[thickness of inner layer] in the thick portion is 0.01 to 2.

2. The fiber-reinforced composite material molded article according to claim 1,
wherein the reinforcing fiber (a1) is carbon fiber having a length equal to or greater than 5 mm.

3. The fiber-reinforced composite material molded article according to claim 1,
wherein the reinforcing fiber (a1) is carbon fiber having a length equal to or greater than 5 mm and equal to or smaller than 50 mm.

4. The fiber-reinforced composite material molded article according to any one of claims 1 to 3,
wherein the reinforcing fiber (b1) is carbon fiber having a length equal to or greater than 5 mm and equal to or smaller than 50 mm.

5. The fiber-reinforced composite material molded article according to any one of claims 1 to 4,
wherein a maximum heating temperature (Tmax) of the composite material (A) is equal to or lower than 200°C.

6. The fiber-reinforced composite material molded article according to any one of claims 1 to 5,
wherein a total of a content rate of the reinforcing fiber (a1) and a content rate of the reinforcing fiber (b1) with respect to a total mass of the fiber-reinforced composite material molded article is equal to or greater than 30% by mass and equal to or smaller than 70% by mass.

7. A method for producing the fiber-reinforced composite material molded article according to any one of claims 1 to 6, comprising:
compression-molding a laminate obtained by laminating the composite material (A) and the composite material (B).

## Patentansprüche

1. Formartikel aus faserverstärktem Verbundstoff, umfassend:
einen dicken Abschnitt mit einer Dicke von 10 bis 50 mm,
wobei der dicke Abschnitt eine innere Schicht, die aus einem gehärteten Material eines Verbundstoffs (A) gebildet ist, der eine Verstärkungsfaser (a1) und ein Epoxidharz enthält, und eine Oberflächenschicht, die aus einem gehärteten Material eines Verbundstoffs (B) gebildet ist, der eine Verstärkungsfaser (b1) und ein Vinylesterharz enthält, aufweist, und
das Verhältnis der Dicke zwischen der inneren Schicht und der Oberflächenschicht, dargestellt durch [Dicke der Oberflächenschicht]/[Dicke der inneren Schicht], in dem dicken Abschnitt 0,01 bis 2 beträgt.

2. Formartikel aus faserverstärktem Verbundstoff gemäß Anspruch 1,
wobei die Verstärkungsfaser (a1) eine Kohlenstofffaser mit einer Länge von gleich oder größer als 5 mm ist.

3. Formartikel aus faserverstärktem Verbundstoff gemäß Anspruch 1,
wobei die Verstärkungsfaser (a1) eine Kohlenstofffaser mit einer Länge von gleich oder größer als 5 mm und gleich oder kleiner als 50 mm ist.

4. Formartikel aus faserverstärktem Verbundstoff gemäß einem der Ansprüche 1 bis 3,
wobei die Verstärkungsfaser (b1) eine Kohlenstofffaser mit einer Länge von gleich oder größer als 5 mm und gleich oder kleiner als 50 mm ist.

5. Formartikel aus faserverstärktem Verbundstoff gemäß einem der Ansprüche 1 bis 4,
wobei die maximale Erwärmungstemperatur (Tmax) des Verbundstoffs (A) gleich oder kleiner als 200°C ist.

6. Formartikel aus faserverstärktem Verbundstoff gemäß einem der Ansprüche 1 bis 5,
wobei eine Gesamtmenge des Anteils der Verstärkungsfaser (a1) und des Anteils der Verstärkungsfaser (b1) bezogen auf die Gesamtmasse des Formartikels aus faserverstärktem Verbundstoff gleich oder größer als 30 Massen-% und gleich oder kleiner als 70 Massen-% ist.

7. Verfahren zur Herstellung eines Formartikels aus faserverstärktem Verbundstoff gemäß einem der Ansprüche 1 bis 6, umfassend:
Formpressen eines Laminats, das durch Laminieren des Verbundstoffs (A) und des Verbundstoffs (B) erhalten wird.

## Revendications

1. Article moulé en matériau composite renforcé par des fibres comprenant :
une partie épaisse présentant une épaisseur de 10 à 50 mm,
dans lequel la partie épaisse présente une couche interne qui est formée d'un produit durci d'un matériau composite (A) contenant une fibre de renforcement (a1) et une résine époxy et une couche de surface qui est formée d'un produit durci d'un matériau composite (B) contenant des fibres de renforcement (b1) et une résine d'ester vinylique, et
le rapport d'épaisseur entre la couche interne et la couche de surface représenté par [l'épaisseur de la couche de surface]/[l'épaisseur de la couche interne] dans la partie épaisse est 0,01 à 2.

2. Article moulé en matériau composite renforcé par des fibres selon la revendication 1,
dans lequel la fibre de renforcement (a1) est une fibre de carbone présentant une longueur égale ou supérieure à 5 mm.

3. Article moulé en matériau composite renforcé par des fibres selon la revendication 1,
dans lequel la fibre de renforcement (a1) est une fibre de carbone présentant une longueur égale ou supérieure à 5 mm et égale ou inférieure à 50 mm.

4. Article moulé en matériau composite renforcé par des fibres selon l'une quelconque des revendications 1 à 3,
dans lequel la fibre de renforcement (b1) est une fibre de carbone présentant une longueur égale ou supérieure à 5 mm et égale ou inférieure à 50 mm.

5. Article moulé en matériau composite renforcé par des fibres selon l'une quelconque des revendications 1 à 4,
dans lequel une température de chauffage maximale (Tmax) du matériau composite (A) est égale ou inférieure à 200 °C.

6. Article moulé en matériau composite renforcé par des fibres selon l'une quelconque des revendications 1 à 5,
dans lequel un total d'une proportion de la fibre de renforcement (a1) et d'une proportion de la fibre de renforcement (b1) par rapport à une masse totale de l'article moulé en matériau composite renforcé par des fibres est égal ou supérieur à 30 % en masse et égal ou inférieur à 70 % en masse.

7. Procédé de production de l'article moulé en matériau composite renforcé par des fibres selon l'une quelconque des revendications 1 à 6, comprenant :
un moulage par compression d'un stratifié obtenu en stratifiant le matériau composite (A) et le matériau composite (B).
